# EUROPEAN PATENT APPLICATION

(11) **EP 1 555 824 A1**
(43) Date of publication of application: **20.07.2005**
(21) Application number: 03754190.1
(22) Date of filing: 20.10.2003
(51) Int. Cl.: H04N 7/173

(54) **MEDIUM DATA REPRODUCTION DEVICE, MEDIUM DATA DISTRIBUTION DEVICE, MEDIUM DATA REPRODUCTION METHOD, MEDIUM DATA REPRODUCTION PROGRAM, MEDIUM DATA DISTRIBUTION PROGRAM, AND COMPUTER-READABLE RECORDING MEDIUM**

(30) Priority: 21.10.2002 JP 2002306327
(71) Applicant: Omron Corporation, Kyoto-shi, Kyoto 600-8530 (JP)
(72) Inventor: ANDO, Tanichi, OMRON C., 801, Minamifudodo-cho, Kyoto-shi, Kyoto 600-8530 (JP)
(74) Representative: Calderbank, Thomas Roger
(86) International application number: PCT/JP2003/013368
(87) International publication number: WO 2004/036914

(57) **Abstract**

A method of the present invention for reproducing a media data set includes a recording step (S 12) of recording a part of the media data set as a data set to be complemented; an instruction receiving step (S20 and S21) of receiving an instruction inputted by a user; a receiving step (S23) of receiving a complementing data set from an external device via a network in accordance with a media data set reproduction instruction being received, the complementing data set being for complementing the data set to be complemented; and a combining and reproducing step (S24) of (I) combining (a) the data set to be complemented, which is recorded in the recording step and (b) the complementing data set received in the receiving step, so as to obtain a compressed media data set, (II) decompressing the compressed media data set through a reversed process of a compression process so as to obtain a reproducible media data set, and (III) reproducing the reproducible media data set.

## Description

### TECHNICAL FIELD

The present invention relates to a media data reproduction device, a media data distribution device, a media data reproduction method, a media data reproduction program, a media data distribution program, and a computer-readable recording medium, each of which is for use in reproducing and/or distributing a media data set such as music data, via a network.

### BACKGROUND ART

In general, copyrights and other rights prohibit users from browsing and/or duplicating a media data set containing information of various contents such as music, a movie, a TV program, or a computer program, unless the users obtain permission of a relevant right holder. Note that, in the present specification, a "media data set" means all kinds of data set containing the information of contents which are reproducible in various reproduction systems including a computer. The media data set may include a computer program, image data (static image data, moving image data), voice data, and music data, and data related to any of these data.

Accordingly, in an occasion of distributing the media data set, there has been a problem of how to prevent the media data set from being plagiarized or duplicated by an unauthorized person in bad faith.

For example, in a case where a media data set is distributed in the form of a recording medium such as a compact disc (CD) or a hard disk in which the media data set is recorded, it is easy to write the media data set read out from the recording medium into a different recording medium. Thus, the method of distribution causes the media data set to be duplicated in a relatively easy manner with the only use of a commercially available recording medium and a device such as a CD player or a CD-ROM drive. Several countermeasures against the duplication are known. For example, as in a case of DVD player and a disk therefor, there is known (i) a technique in which a media data set to be recorded is encrypted in order to prevent the data from being illegally read out, and (ii) a technique in which a duplication-disabling (protecting) process is carried out in order to prevent the data from being illegally duplicated. Further, in a case of distributing a media data set through the network, there is known (i) a technique in which the media data set subjected to the distribution is encrypted in a form of software in order to ban the illegal reading out of the data, and (ii) a technique in which a duplication-disabling (protecting) process is carried out.

Further, a memory card having a copyright protecting function is known. In this memory card, not only a process in the form of software is carried out, but also individual hardware information of the memory card is associated with a protection process for the media data set. This allows for protecting process for the media data set. For example, in order to carry out the protection process, the memory card having a copyright protecting function integrally has a media data set and individual ID information. This prevents the media data set from being recorded or duplicated in a memory card having different ID information from that of the memory card in which the media data set is supposed to be recorded.

However, no matter what kind of encryption process or protection process is carried out, once the detail of the process is known by a person in bad faith, it is no longer possible to prevent the plagiarism or the duplication of the media data set through a decryption process or a protection-disabling process. For example, even if a media data set is subjected to an encryption process, the encryption process is no longer effective, after a corresponding encryption method or an encryption key information of the encryption method leaks out. In a mean while, leveling up of an encryption process for strengthening a protection level of the media data set will give rise to a longer time and a heavier burden in processes for encrypting or decrypting the media data set. As such, in an actual media data set distribution service, it is difficult to adopt an excessively sophisticated encryption process in terms of a service cost.

Further, in a case where a recording medium has a special hardware arrangement, as in the case of the foregoing memory card having the copyright protecting function, the arrangement of the recording medium itself becomes complicated. This causes the recording medium to be expensive.

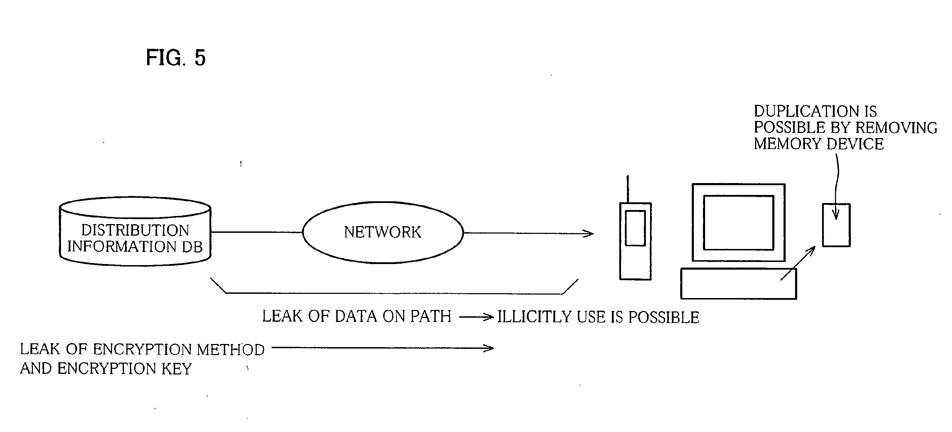

Fig. 5 is an explanatory diagram illustrating a problem in a distribution of the media data set by using a conventional network. As shown in Fig. 5, in a case where a media data set is distributed, via a net work, from a distribution information DB (data base) to a mobile phone or a personal computer having specific identification information (e.g. phone number), media data set to be transmitted and received may be monitored within the network by a person in bad faith. This causes the media data set to leak out. Particularly, in a case of using the internet as the network, the data to be communicated is most likely to leak out, through various kinds of packet monitorings. In this case, if a person who plagiarized the data knows the detail of the encryption (e.g. encryption method, or encryption key), then the media data set thus leaked out appears to be illicitly used, even though the media data set to be transmitted and received has been encrypted.

Moreover, even if the media data set is not plagiarized within the network, there still remains a risk that, as shown in Fig. 5, a recording medium (e.g. hard disk, memory card) is removed from a mobile phone or a personal computer in which a downloaded media data set is recorded This causes the media data set to be plagiarized or duplicated.

In spite of the foregoing problems regarding the media data set distribution, it has been necessary to widely disclose information of a file format or the like. This is especially true in the music data and the like, due to their character reasons. Accordingly, it has been extremely difficult to protect the media data set that had been distributed and the copyrights thereof. For this reason, the media data set such as the music data is currently distributed via the network by a limited number of distributors. Additionally, in many cases, even such limited number of distributors prohibit storing of the distributed media data set in a receiving terminal. This is because the plagiarism and the duplication of the media data set can be prevented.

However, in the case where the storing of the distributed media data set in the receiving terminal is prohibited by the data distributor, the media data set has to be downloaded via the network, every time a user uses (reproduces) the media data set. This causes the following problems.

First, in a case where a communication speed of the media data set via the network is not sufficient for a size of the data, a waiting time to use the media data set becomes longer. For example, a waiting time (receiving time) of 10 hours to reproduce an hour long music data (media data set) is over a tolerance of users in general.

Japanese Unexamined Patent Publication No. 2002-91452 (Tokukai 2002-91452; published on March 27, 2002) discloses a technology for downloading a media data set. In the technology, a sample data set which has been already been obtained is excluded in downloading of the media data set via a network. With this technology, it is possible to avoid repeatedly downloading a part corresponding to the sample data. This allows a reduction of the communication time which has been wasted on repeatedly downloading the part corresponding to the sample data set. However, even in the foregoing conventional technology, the entire media data set is downloaded through the network after all. Therefore, an increase in an amount of the media data set causes a longer communication time for downloading the media data set.

Further, Japanese Unexamined Patent Publication No. 2002-204228 (Tokukai 2002-204228; published on July 19, 2002) discloses a technology in which a digital content (media data set) is divided into two parts or more, and each of the parts are encrypted. This technology improves a security level. However, the conventional technology does not reduce an amount of data to be communicated. Therefore, a communication time needed for the downloading is barely reduced.

Further, in the foregoing case where the storing of the distributed media data set in the receiving terminal is prohibited, the media data set is transmitted every time the media data set is used (reproduced). This causes the network to bear a heavier burden of trafficking. Further, in a case where a fee for using the network is charged based on an amount of time the network has been used, communicating of the media data set will cost very high.

These problems of the communication cost and waiting time associating to the downloading of the media data set have been causing users to be reluctant to use the media data set distribution services, thus giving a serious negative influence to the development of the distribution services.

Japanese Unexamined Patent Publication No. 2002-278859 (Tokukai 2002-278859; published on September 27, 2002) discloses a technology in which a content is decomposed or divided into an absent content and a difference content, and the content is reproduced by using both of the absent and difference contents. However, in this conventional technology, there is a possibility that the content may be reproduced by using only the absent content. This presents a problem in terms of security and the development of the distribution services. For example, by using only the absent content, a user may (i) reproduce at least a part of an image or sounds, or (ii) reproduce the content in an incomplete state such as an intermissive state. In this case, the data distributor cannot appropriately charge the fee, or administrate the distribution of the data.

In view of the foregoing problems, the present invention was made, and an object of the present invention is to provide a media data reproduction device, media data distribution device, media data reproduction method, a media data reproduction program, a media data distribution program, and a computer-readable recording medium, each of which realizing, with a simple arrangement, (i) a convenience of users and (ii) a high level of security for protecting a media data set against a plagiarism and a duplication.

### DISCLOSURE OF INVENTION

A media data reproduction device of the present invention includes: (A) a recording section for recording therein a part of a media data set as a data set to be complemented; (B) an instruction receiving section for receiving an instruction inputted by a user; (C) a receiving section for receiving a complementing data set via a network in accordance with an instruction of reproducing the media data set, the complementing data set being for complementing the data set to be complemented, and the instruction of reproducing received by the input-instruction receiving section; and (D) a control section for (I) combining (a) the data set to be complemented, which is recorded in the recording section and (b) the complementing data set being received by the receiving section, so as to obtain a compressed media data set (II) obtaining a reproducible media data set from the compressed media data set by decompressing the compressed media data set through a reversed process of a compression process, and (III) carrying out a reproduction of the reproducible media data set.

Further, a method of the present invention for reproducing a media data set includes: (A) the recording step of recording a part of the media data set as a data set to be complemented; (B) the instruction receiving step of receiving an instruction inputted by a user; (C) the receiving step of receiving a complementing data set from an external device via a network in accordance with an instruction of reproducing a media data set, the complementing data set being for complementing the data set to be complemented, the instruction being received in the receiving step; and (D) the combining and reproducing step of (I) combining (a) the data set to be complemented, which is recorded in the recording step and (b) the complementing data set received in the receiving step, so as to obtain a compressed media data set, (II) decompressing the compressed media data set through a reversed process of a compression process so as to obtain a reproducible media data set, and (III) reproducing the reproducible media data set.

In the present invention, a format of the data set to be complemented and the complementing data set is not particularly limited, as long as the entire media data set can be reproduced by combining the data set to be complemented with the complementing data set. For example, it is possible to (i) use bit information of a specific area of the entire media data set for the complementing data set, and (ii) use the media data set from which the foregoing bit information (complementing data set) is excluded for the data set to be complemented.

In the foregoing arrangement, before the user gives an instruction, only a part of the media data set being constituted of data such as music data, voice data, moving image data, static image data, a computer program, or data related to any of these is preliminarily recorded as the data set to be complemented. Then, in accordance with the instruction of reproducing inputted by the user, the complementing data set for complementing the data set to be complemented is received via the network. This complementing data set and the preliminarily recorded data set to be complemented are used for combining to obtain the compressed media data set. Thus, the compressed media data set is obtained. This compressed media data set is not reproducible as it is. However, by decompressing the compressed media data set through a reversed process of the compression process, the reproducible media data set is obtained. A content of the reproducible media data set is reproduced by using the reproducible media data set thus obtained.

With the foregoing arrangement, since the entire media data set is regenerated after the instruction of reproducing is inputted by the user, it is possible to prevent the entire media data set from being plagiarized or duplicated, even if (a) the data set to be complemented, which is recorded before the instruction of reproduction, or (b) the complementing data set being transmitted via the network in accordance with the instruction of reproduction, is plagiarized.

Particularly, in the present invention, the data set to be complemented and the complementing data set are not the actual media data set; they are parts of the compressed media data set, which is not reproducible. Thus, it is not possible to reproduce the data set to be complemented (or the complementing data set) alone. In other words, the present invention ensures that the data set to be complemented is not reproducible without the use of the complementing data set. Thus, an illicit reproduction of the data is effectively prevented.

Further, For using the media data set, the user simply has to receive the complementing data set via the network. Thus, the user will not be bothered with a long waiting time in a network communication and a communication cost. As a result, it is possible to realize a high level of convenience.

Additional objects, features, and strengths of the present invention will be made clear by the description below. Further, the advantages of the present invention will be evident from the following explanation in reference to the drawings.

### BRIEF DESCRIPTION OF DRAWINGS

Fig. 1(a) is a flowchart showing a processes of receiving a data set to be complemented in a musical composition reproduction terminal.
Fig. 1(b) is a flow chart showing a process of receiving the complementing data set in the musical composition reproduction terminal.
Fig. 2 is a block diagram of an embodiment, and is showing a schematic arrangement of a musical composition distribution system.
Fig. 3 is a block diagram showing a schematic arrangement of a musical composition reproduction terminal constituting the musical composition distribution system.
Fig. 4(a) is a flowchart showing a processes in which a server for distributing a data set to be complemented separates a musical composition data set into the data set to be complemented and the complementing data set.
Fig. 4(b) is a flowchart showing a process in which a server for distributing a complementing data set separates musical composition data set into the data set to be complemented and the complementing data set.
Fig. 5 is a schematic view indicating problems in a distribution of the media data set by using a conventional network.

### BEST MODE FOR CARRYING OUT THE INVENTION

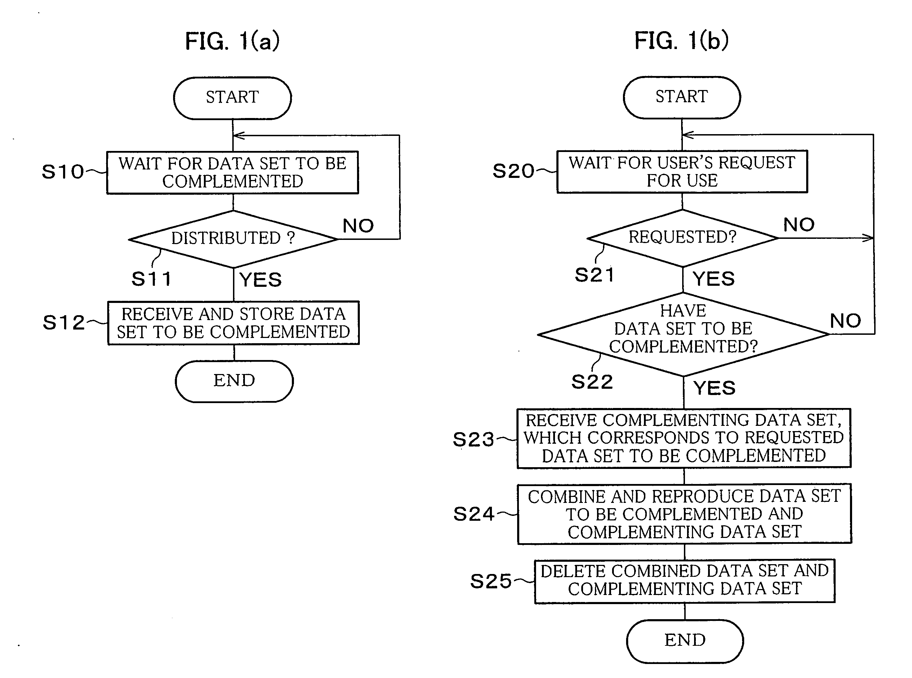

The following describes an embodiment of the present invention with reference to Figs. 1 through 5. Note that the present invention is not limited to the embodiment.

### (1. Arrangement of Musical Composition Distribution System)

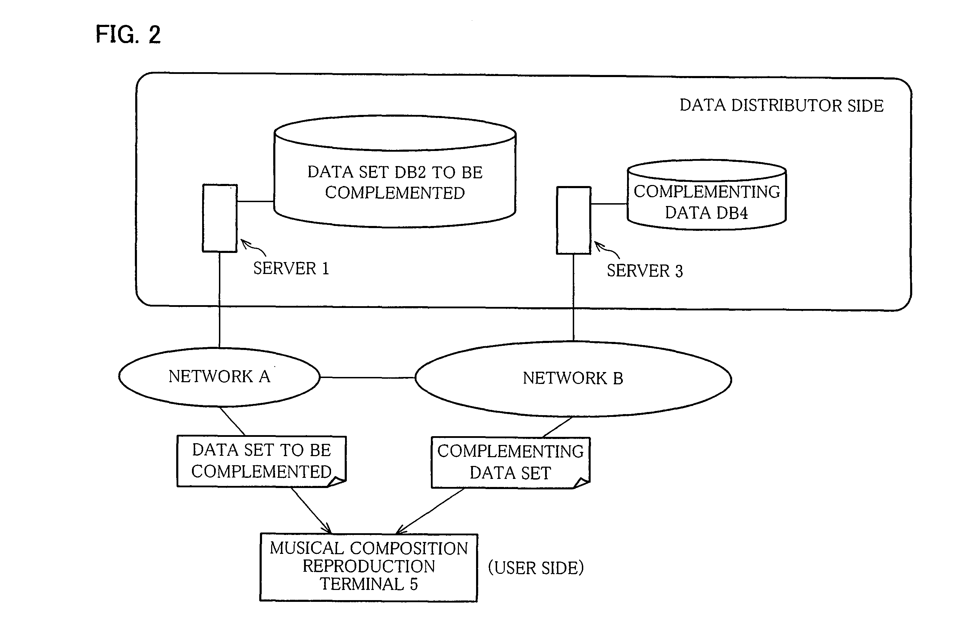

Fig. 2 is a block diagram schematically showing an arrangement of a musical composition distribution system in accordance with the present embodiment. As shown in Fig. 2, in the musical composition distribution system, a musical composition reproduction terminal 5 (media data reproduction device; hereinafter also simply referred to as terminal) on a user side is connected, via a network A and a network B, with a server 1 for distributing data to be complemented, DB2 for data set to be complemented (Hereinafter referred to as DB2), a server 3 (media data distribution device) for distributing complementing data, and complementing data DB4 (media data distribution device; hereinafter referred to as DB4), each on a data distributor side. The server 1 provides, via the network A, a data set to be complemented to the musical composition reproduction terminal 5, and the server 3 provides, via the network B, a complementing data set to the musical composition reproduction terminal 5.

In the present embodiment, the data set to be complemented and the complementing data set have such a relationship that an entire set of musical composition data (media data set) is reproduced in a compressed state by combining the both data sets. This is described in detail later.

The server 1 and the server 3 in the arrangement are publicly known network servers. Further, the DB2 may be realized by a hard disk having a large volume, various magnet-optical disks, or other storage means. The DB2 stores therein a large number of data sets to be complemented. Similarly, the data DB4 may be realized by a hard disk having a large volume, various magnet-optical disks, or other storage means. This DB4 stores therein a large number of the complementing data sets for complementing the respective data sets to be complemented.

The network A and the network B may be (i) a publicly-known communication network such as the internet and LAN (Local Area Network), and/or (ii) a publicly-known communication line such as a public telephone service, a private line, or ISDN (Integrated Services Digital Network). In the present embodiment, the network A is a wireless LAN network which is capable of carrying out a data communication at a speed of about 11Mbps to 54Mbps. The network B is Future Public Land Mobile Telecommunication System (FPLMTS) network which is capable of carrying out the data communication at a speed of about 144 kbps to 2.4 Mbps.

The network A and the network B are separately arranged in the present embodiment. However it is possible to use a common network instead of the separate networks A and B. However, by separately arranging the network A and the network B so that a transmission path for the data set to be complemented and a transmission path for the complementing data set are separately provided, it is possible to reduce a risk of someone's illicit obtaining of an entire musical composition data set by plagiarizing data on the network.

Further, it is possible to use a common server and a common DB for the server 1, the server 3, the DB2, and the DB4.

### (2. Arrangement of Musical composition reproduction terminal)

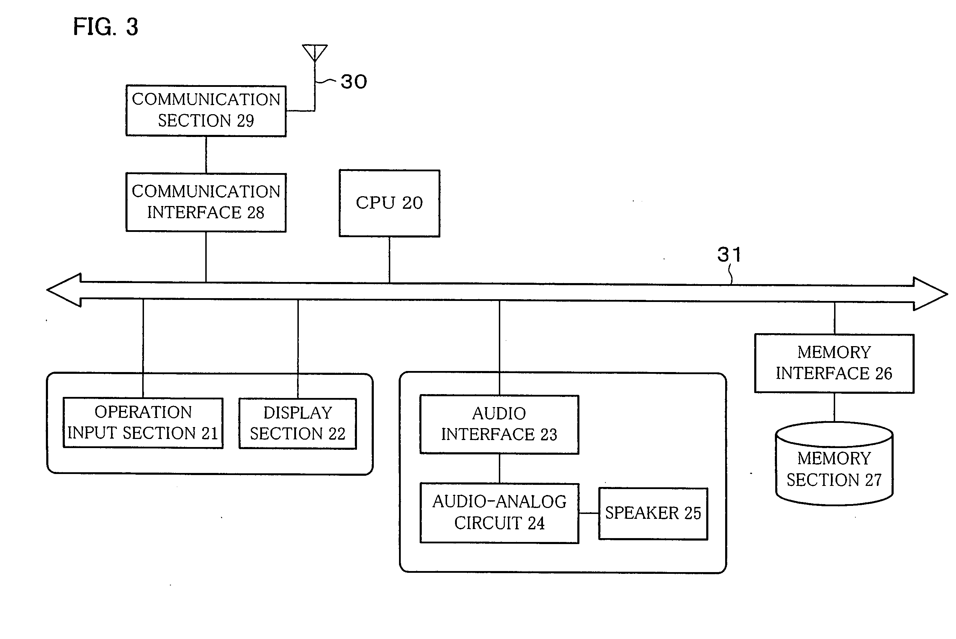

Fig. 3 is a block diagram schematically showing an arrangement of a musical composition reproduction terminal 5. The musical composition reproduction terminal 5 is, for example, a terminal device installed in a vehicle. As shown in Fig. 3, the musical composition reproduction terminal 5 includes a CPU (control section) 20, an operation input section (input-instruction receiving section) 21, a display section 22, an audio-interface 23, an audio-analog circuit 24, a speaker 25, a memory interface 26, a memory section (recording section, recording medium) 27, a communication interface 28, a communication section (receiving section) 29, and a transmitting/receiving antenna 30. Further, each of the components are connected with one another via an input/output bus 31.

For example, the CPU 20 may be realized by a microcomputer, and is arranged so that its computing and controlling functions control each operation of the components in the musical composition reproduction terminal 5.

The operation input section 21 includes buttons and switches such as ten-key keyboard, and a pointing device. Via the input/output bus 31, the operation input section 21 supplies to the CPU 20 a signal varying depending on how a user operates the musical composition reproduction terminal 5. The user can give instructions such as playback/ stopping of a musical composition by operating the operation input section 21. With a use of voice recognizing means in the operation input section 21, it is possible to receive a spoken instruction given by the user.

The display section 22 includes a display element such as a liquid crystal display (LCD) and/or a light emitting diode (LED). The display section 22 displays (i) operations inputted from the operation input section 21, and (ii) various messages such as information about the musical composition.

The audio-interface 23 is an interface circuit for outputting an analog audio signal in accordance with an instruction given by the CPU 20. This audio-interface 23 includes a digital signal processor for carrying out various digital signal processing, and a DAC (Digital-to-Analog converter) for generating an analog audio signal in accordance with processed digital audio signal.

The audio-analog circuit 24 amplifies and modulates the analog audio signal outputted from the audio-interface 23. The audio-analog circuit 24 includes various kinds of amplifying circuits and a modulation circuit. The speaker 25 carries out an audio output of the analog audio signal (including later-described reproduced signals of the musical composition data set) outputted from the audio-analog circuit 24. A headphone terminal may be provided in place of the speaker 25, so that a set of headphones may be externally connected to output the audio signal.

For example, the memory section 27 may include a RAM (Random Access Memory), a ROM (Read Only Memory), a hard disk, and/or a nonvolatile semiconductor memory. This memory section 27 stores therein various programs and various data to be read out by the CPU 20 via the memory interface 26 and the input/output bus 31. Particularly, the memory section 27 in the musical composition reproduction device 5 stores therein a musical composition data reproduction program (described later) and a database containing a large number of data sets to be complemented.

The communication section 29 is a communication circuit for carrying out data communications via the wireless LAN network (network A) and the FPLMTS network (network B). The communication section 29 communicates with an external device, by (i) receiving a communication instruction from the CPU 20, via the communication interface 28 for controlling a communication sync signal and various communication protocols, and (ii) outputting an electric wave signal from the transmitting/receiving antenna 30. Thus, the communication section 29 ensures a data communication function based on a radio packet telecommunication.

### (3. Examples of Operation of Musical Composition Distribution System)

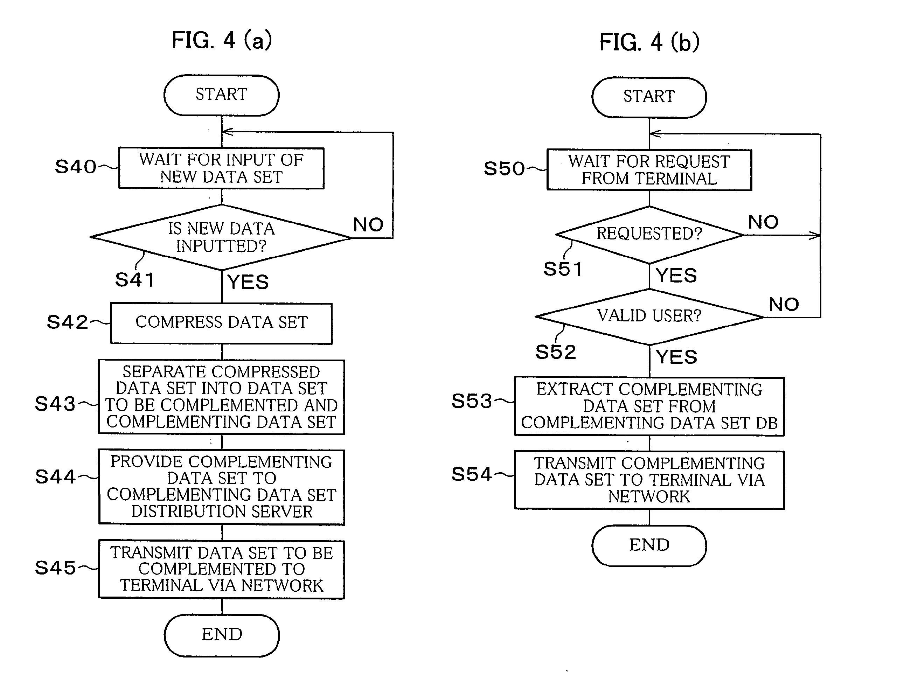

Next the following describes examples of operations of a musical composition distribution system in accordance with the present embodiment, with reference to Figs. 1(a), 1(b), 4(a), and 4(b).

The following description deals with a case where each operation of the server 3 and the musical composition reproduction terminal 5 is realized by causing a computer (CPU) to execute a musical composition data distribution program and a musical composition data reproduction program. Further, the musical composition data distribution program and the musical composition data reproduction program are respectively stored in a computer-readable recording medium (including the memory section 27 in the music reproduction device 5) provided in the server 3 and the musical composition reproduction terminal 5.

### (3-1. Examples of Operation of Server for Distributing Data Set to be Complemented)

Fig. 4(a) is a flowchart showing a process in which the server 1 separates a musical composition data set into a data set to be complemented and a complementing data set.

First, as shown in Fig. 4(a), the server 1 accepts entering of a new set of musical composition data (new data) (step 40; hereinafter referred to as S40), and maintains the state until the new musical composition data set is entered (S41).

Next, the server 1 compresses the new musical composition data set thus entered (S42). This restrains a transmitting amount of subsequent data being transmitted later, and makes it difficult for unwanted people to restore the musical composition data set by plagiarizing and duplicating the data set to be complemented and the complementing data set. A compression method may be an arbitrary compression method, such as MP3, Ogg, Vorvis, ATRAC3, WMA, TwinVQ, AAC, and so on. A reversible compression method is used, in a case where a user needs to completely restore an original data of a musical composition data set during reproducing such a musical composition data. A non-reversible compression method is used, in a case where no problem occurs even if a part of information content is lost in an original musical composition data set (in other words, in a case where a deterioration in a sound quality is acceptable). In this step, the musical composition data set is more securely protected by carrying out both encryption and compression with respect to the musical composition data.

Next, the server 1 separates the musical composition data set compressed in the step S42 into a data set to be complemented and a complementing data set (S43). As described, no specific format is required for the data set to be complemented and the complementing data set, provided that the entire musical composition data set is reproduced by combining the data set to be complemented with the complementing data set. As such, various kinds of methods can be carried out for the separation in this step.

It is also preferable that the separation be carried out so that at least one of the data set to be complemented and the complementing data set includes a plurality of data parts. With this arrangement, the media data set is not reproduced unless all of the data parts are obtained. Therefore, it is possible to effectively prevent an illicit reproduction of the media data set. Further, the musical composition reproduction terminal 5 allows a user to separately obtain the data parts in a plurality of times, in accordance with the user's schedule and the user's budget.

However, it is preferable that a total size of the data set to be complemented be larger than a total size of the complementing data set. This allows a relatively small size of a subsequent complementing data set. Thus, it is possible to further saves the communication cost and waiting time for the network communication.

[Method A] to [Method C] described below are representative methods for separating a compressed musical composition data set into a data set to be complemented and a complementing data set.

[Method A] With the method A, information of a specific bit in an entire compressed musical composition data set may be used as a complementing data set. A remaining data set, which is obtained by removing the information of a specific bit (the complementing data) from the entire media data set, may be used as a data set to be complemented. For example, the musical composition data set compressed in the step S42 is converted into a byte string of 8 bits, and a specific 1bit is extracted from each piece of byte information. This specific 1bit is used as a complementing data set, and the remaining bits of the byte information is used as a data set to be complemented. In this case, a size of the complementing data set is one-eighth of the media data set, and a size of the data set to be complemented is seven-eighths of the media data set. An amount of data to be extracted as the complementing data set is not limited to 1 bit, and may be 2 bits or more.

[Method B] With the method B, a musical composition data set may be separated into a complementing data set and a data set to be complemented, by using a separation table presetting information relating to how bit information constituting a compressed musical composition data set is divided to the complementing data set and the data set to be complemented.

For example, in a case where the compressed musical composition data set has a data structure of 8 bits per data unit, the separation table preliminary specifies, for each of the data units, which bit information should be used as the complementing data set. More specifically, for each of the data units having an information amount of 8 bits, the separation table designates a range of bits of the 8-bit information used as the complementing data set. The range is designated, for example, as: bit information of M bits starting from the L-th bit. In this case, for example, in each of the data units, a value of L can be randomly selected from a range of 1 to 8, fixing a value of M at 1. Alternatively, it is possible to randomly select the value of M from the range of 1 to 8, fixing the value of L at 1. Alternatively, in each of the data units, the value of M can be randomly selected from a range of 1 to 3, fixing a value of L at 1. Alternatively, it is possible to randomly select both L and M from the range of 1 to 8 in each of the data units.

If the compressed musical composition data has a data structure of 8 bits per data unit, and if (L + M -1) is larger than 8, then it is necessary to ensure that the information data falling within the data unit is designated by, for example, subtracting 8 from (L + M -1).

This separation table has a predetermined number of parameters (items), and it is preferable that these parameters be repeatedly applied to the musical composition data set from a leading part thereof. For example, a separation table having 256 parameters is applied to 1st to 256th data units of a musical composition data set. Then the separation table is repeatedly applied to 257th to 512th data units, 513th to 768th data units, and so on. This allows the single musical composition data to be separated into the complementing data set and the data set to be complemented.

It is necessary that such a separation table be arranged to be shared by a data separating side and a data combining side. This arrangement can make it harder for a third person to illicitly obtain the musical composition data set, by regularly/irregularly changing the content of the separation table.

[Method C] With the method C, a part of time-based data arrangements, which varies on a time-basis, in a compressed musical composition data set is used as a complementing data set, and the remaining part of the musical composition data set is used as a data set to be complemented. Specifically, the complementing data set and the data set to be complemented are created by extracting and separating the complementing data set from the compressed musical composition data set at a predetermined time interval. For example, an extraction of data corresponding to 1 second is carried out, for every data amount corresponding to 10 seconds, with respect to the musical composition data set from the leading end thereof. The data thus extracted is used as a complementing data. In this case, the remaining data, obtained by removing the complementing data set from the musical composition data set, is used as a data set to be complemented. This is a relatively simple separation method. Nevertheless, since, for every ten seconds, the data missing occurs for one second, it is not possible for a person who illicitly obtained the data set to be complemented to obtain a properly compressed musical composition data set. Thus, it is extremely difficult to obtain a reproduction based only on a data set to be complemented. This allows an effective avoidance of an illicit reproduction of the musical composition data set.

In this method, combining and reproducing processes in the terminal becomes relatively simple. Thus, time needed for carrying out the combining and reproducing processes is reduced. As in [Method B], it is preferable to use a separation table. In the separation table, information of allotment is set in advance, the information of allotment regarding what part of the musical composition data set is used for the complementing data set, and what part is used for the data set to be complemented. Although a common separation table needs to be provided to both a data separating party and a data combining party, by regularly/irregularly changing the content of the separation table, it is possible to make it more difficult for a third party to illicitly obtaining the musical composition data set.

It is needless to mention that, no matter which one of the foregoing [Method A] to [Method C] is used, it is necessary that a party (terminal party) concerning the musical composition reproduction terminal 5 has been notified of a reversing process (which may be a decompression method that serves as the reversing process of the compression method), so that the musical composition data set is combined and reproduced through the reversing process.

Next, the server 1 provides the complementing data set separated in the step S43 to the server 3 (S44). The complementing data set may be directly provided from the server 1 to the server 3 by using communication means. It is also possible to indirectly provide the complementing data set to the server 3 by an administrator of the server 1 by using an external recording medium of various kinds.

Lastly, the server 1 transmits, to the musical composition reproduction terminal 5 (terminal) via the wireless LAN network, the data set to be complemented, the data set having been separated in the step S43 (network A, See Fig. 2) (S45).

With the use of the arrangement in which the data set to be complemented is transmitted to the musical composition reproduction terminal 5 via a broadband network such as the wireless LAN network as in the present embodiment, it is possible to efficiently provide, to the musical composition reproduction terminal 5, the data set to be complemented, whose size in general is larger than the complementing data set.

For example, today, a wireless LAN network called Hotspot (registered trademark) is rapidly becoming popular and provided in many restaurants, shopping malls, gas stations, public offices, parking lots, and intersections. With the use of the Hotspot, the musical composition reproduction terminal 5 can efficiently obtain the data set to be complemented, even in a case where the musical composition reproduction terminal 5 installed in a vehicle is on the move when the vehicle moves.

Further, in obtaining the data set to be complemented, it is preferable that a user of the musical composition reproduction terminal 5 designate, in advance, a name of the desirable data set to be complemented (i.e., name of musical composition data set). This is more convenient for a user, because the musical composition reproduction terminal 5 is able to obtain, in advance, the data set to be complemented which corresponds to the musical composition data set likely to be instructed to playback by the user.

The data set to be complemented may be indirectly provided from the server 1 to the musical composition reproduction terminal 5, by using a recording medium of various kinds. For example, the non-complementing data set may be distributed and sold in a form of a magnet-optical disk in which the non-complementing data set is recorded, whereby a user of the musical composition reproduction terminal 5 may store, in the memory section 27 (See Fig. 3) in the musical composition reproduction terminal 5, the data set to be complemented. Further, the musical composition reproduction terminal 5 may be shipped from a factory in such a manner that the data set to be complemented is stored in the memory section 27 (See Fig. 3) of the musical composition reproduction terminal 5 in advance.

The data set to be complemented is relatively large in data size but cannot the musical composition data set cannot be reproduced by solely using the data set to be complemented, whereby the musical composition data set is kept protected. Thus, there is a relatively large freedom in how the data set to be complemented is distributed. For example, in the foregoing distribution method in which the magnet-optical disk is used, it is possible to easily distribute the non-complementing data set of several gigabytes at a low cost.

Here, Fig. 1(a) is a flowchart showing how in the musical composition reproduction terminal 5 receives the data set to be complemented. As illustrated in Fig. 1(a), before a user instructs to reproduce the musical composition data set, the musical composition reproduction terminal 5 is in a state of waiting for distribution of the data set to be complemented, from the server 1 (S10), and maintains the state until the data set to be complemented is distributed from the server 1 (S11).

When the data set to be complemented is distributed from the server 1 thereto, the musical composition reproduction terminal 5 receives the data set to be complemented, and stores, in the memory section 27 (See Fig. 3), the data set to be complemented (S 12, recording step).

### (3-2 Examples of Operation of Complementing Data Distribution Server)

Fig. 4(b) is a flowchart showing a process in which the server 3 separates the musical composition data set into the data set to be complemented and the complementing data set.

First, as illustrated in Fig. 4(b), the server 3 waits for the musical composition reproduction terminal 5 (terminal) to make a request of transmitting the complementing data set (S50), and maintains the state until the request of transmitting the complementing data set is made by the musical composition reproduction terminal 5 (S51).

Next, the complementing data distribution server 3 requests a user of the musical composition reproduction terminal 5 to input and transmit identification information or a password (which may be information o the like particular to the musical composition reproduction terminal 5) thereto, so as to authenticate the user of the musical composition reproduction terminal 5 (terminal) (S52). With this authentication, the complementing data set is provided to only valid users. On the other hand, an invalid user is not able to combine and reproduce the musical composition data set by using the musical composition reproduction terminal 5. Thus, it is possible to securely protect the musical composition data set against illicit plagiarism and duplication.

In a case where the authentication of a user failed continuously and the request of transmitting the complementing data set is likely to be made via illicit access, it is preferable that the server 3 record therein the fact that the authentication of a user failed continuously, or report it to the administrator.

In a case where the authentication of the user of the musical composition reproduction terminal 5 is failed in the step S52, the musical composition reproduction terminal 5 returns to the state of waiting for the request of transmitting the complementing data set (i.e. returns to S50). On the other hand, in a case where the user is authenticated, (i) the complementing data set is extracted from the complementing data set DB4 in accordance with the request from the musical composition reproduction terminal 5, the request having been received in the steps S50 and S51 (S53), and (ii) the complementing data set is transmitted to the musical composition reproduction terminal 5 (terminal) via the FPLMTS network (network B, See Fig. 2)(S54).

The communication section 29 in the musical composition reproduction terminal 5 preferably receives the complementing data set having been encrypted. Since the complementing data set received via the FPLMTS network (network B) in accordance with the user's instruction has been encrypted, it is possible to restrain a risk that contents of the data plagiarized on the network is decoded.

Fig. 1(b) is a flow chart showing a process of receiving the complementing data set in the musical composition reproduction terminal 5.

As shown in Fig. 1(b), first, the musical composition reproduction terminal 5 waits for the user to make a request of use (reproduction instruction)(S20, input-instruction receiving step). The musical composition reproduction terminal 5 maintains the state until it receives the request of use (reproduction instruction) made by the user (S21). When the request of use (reproduction instruction) from the user is received, the process proceeds to the next step, and it is checked as to whether or not the data set, which is to be complemented, of a requested music composition is stored in the memory section 27 (See Fig. 3) (S22). This checking is carried out with respect to every data part of the data set to be complemented, in a case where the data set to be complemented includes plural data parts. In a case where the data set, which is to be complemented, of the requested musical composition is not stored in the memory section 27, the musical composition reproduction terminal 5 returns to the state of waiting for the request of use from the user (i.e. returns to S20). On the other hand in a case where the data set, which is to be complemented, of the requested musical composition is stored in the memory section 27, the process proceeds to the next step.

In the next step, the musical composition reproduction terminal 5 requests the server 3 to transmit the complementing data set corresponding to the requested musical composition (the data set to be complemented), and in a case where the user is authenticated, the musical composition reproduction terminal 5 receives the complementing data set from the server 3 (S23, receiving step). In the case where the complementing data set includes the plural data parts, the acquisition of the data is so carried out that all of the data parts are obtained.

Next, the musical composition reproduction terminal 5 combines the complementing data set with the data set to be complemented, the complementing data set received in S23, and the data set to be complemented being stored in the recording section 27. Thereby a compressed media data set is obtained. Then, the compressed media data set is decompressed through a reversed process of a compression process, so that a reproducible media data set is obtained from the compressed media data set. After that, the reproducible media data set is reproduced. (S24, combining and reproducing step). In order to reproduce the music composition data set via combining and decompressing, the reproduction of the data set by combining the data set to be complemented and the complementing data set may be carried out by reversing the separating procedure of S43 (to separate the music composition data set into the complementing data set and the data set to be complemented) (See [Method A] to [Method C]) and then performing the a decompression method that corresponds to the compression method in which the music composition data set is compressed.

After the media data set is combined and reproduced in the step S24, the musical composition reproduction terminal 5 finally deletes the compressed media data set, the reproducible media data set, and the complementing data set received in the step S23 (S25). Thus, even after the musical composition data set has been reproduced, it is possible to avoid the plagiarism and the duplication of the musical composition data set thus regenerated and the complementing data set needed for regeneration of the musical composition data set. This realizes more effective protection for the musical composition data set.

In the step S25, it is preferable to successively delete that part of the musical composition data set which has been reproduced, as the musical composition data set is being combined and reproduced, rather than deleting the musical composition data set after the entire musical composition data set is combined and reproduced. Moreover, in a case where plural sets of the musical composition data set is combined and reproduced, it is also preferable that the plural sets of the musical composition data having been reproduced be deleted after being combined and reproduced, except for a few sets of the musical composition data having been reproduced before a set of the musical composition data designated by the user.

This causes the memory section 27 (Fig. 3) in the musical composition reproduction terminal 5 to have only necessary musical composition data set thus combined. Thus, it is possible to reduce a risk of having the musical composition data set being plagiarized and duplicated through bulk duplication and/or analysis of the contents in the memory section 27 by using an in-circuit emulator or the like.

As described, the present embodiment deals with a case where the musical composition reproduction terminal 5 is installed, e.g., in a vehicle or the like. However, a place for installation or physical form of the musical composition reproduction terminal 5 is not limited to this. For example, the musical composition reproduction terminal 5 may be provided with a removal external hard disk, so that it is possible to move the external hard disk from the vehicle to a house and install the external hard disk in the house. In this case, it is also preferable that the data set to be complemented is distributed to the musical composition reproduction terminal 5 by connecting the external hard disk with a broadband network installed inside the house.

Further, it is preferable that (i) the musical composition reproduction terminal 5 be provided with an abnormal situation detecting means for detecting an abnormal situation information, and (ii) operation of the communication section 29 and/or the CPU 20 be stopped operating in accordance with the abnormal situation information detected by using the abnormal situation detecting means.

Here, the abnormal situation detecting means for detecting the abnormal situation information detects information regarding an illicit plagiarism and duplication of the musical composition data set. This information is for example (i) information of an abrupt opening of a housing of the musical composition reproduction terminal 5, (ii) information of an unexpected electrical connection to an debug-use terminal or a memory provided therewith, (iii) an information of an unexpected behavior of a program executed in the musical composition reproduction terminal 5.

Examples of the abnormal situation information and the abnormal situation detecting means are as follows.
1) To provide a sensor for sensing, as the error information, that the housing of the musical composition reproduction terminal 5 is opened.
2) To provide a sensor for sensing that a prove or an in-circuit emulator is connected to a connection terminal of the musical composition reproduction terminal 5, thereby sensing, as the error information, an illicit connection of an external device and an illicit access.
3) To sense, as the error information, that a program executed by the CPU 20 in the musical composition reproduction terminal 5 is changed by a predetermined amount in terms of a checksum, a size of data file, or an amount of memory being used.

With the foregoing arrangement, the communication section 29 stops receiving the complementing data set, and/or the CPU 20 stops combining and reproducing the musical composition data set, in a case where a suspicious person attempts an illicit plagiarism and duplication of the musical composition data set via the musical composition reproduction terminal 5. This provides strong protection of the musical composition data set against an illicit plagiarism and a duplication.

In the above, the present embodiment in accordance with the present invention discusses the case of distributing and reproducing the musical composition data set in the musical composition distribution system. However, the present invention is also applicable to a case where the media data set subjected to the distribution and the reproduction is a media data set other than the musical composition data set, such as voice data, moving image data, static image data, computer program, combinations of these data, and the other data.

Further, in the media data reproduction device, it is preferable that the data set to be complemented be externally distributed to the recording section by using a recording medium. Similarly, in the media data reproduction method, it is preferable that the data set to be complemented being recorded in the recording step be externally distributed by using a recording medium.

With these arrangements, the data set to be complemented whose size is relatively large can be obtained by simply reading a recording medium storing therein the data set to be complemented, instead of obtaining, via a network, the data set to be complemented. Thus, compared with a case where the data set to be complemented is obtained via a network, it is possible to make a remarkable reduction in a communication burden as well as a waiting time and a communication cost associated with the communication burden.

Further, the media data reproduction device is preferably arranged so that at least one of the data set to be complemented and the complementing data set includes a plurality of data parts.

With this arrangement, the media data set is not reproduced unless all of the data parts are obtained. Therefore, it is possible to effectively prevent an illicit reproduction of the media data set. Further, the media data reproduction device allows a user to separately obtain the data parts in a plurality of times, in accordance with the user's schedule and the user's budget.

Further, the media data reproduction device may be so arranged that, after the reproduction, the control section deletes (i) the compressed media data set, (ii) the reproducible media data set, and (iii) the complementing data set that has been received by the receiving section.

With the foregoing arrangement, it is possible to avoid the plagiarism and the duplication of the media data set and the complementing data set needed for reproduction of the media data set, even after the musical composition data set has been reproduced. This realizes more effective protection for the musical composition data set.

Further, the media data reproduction device is preferably arranged such that a total size of the data set to be complemented is larger than a total size of the complementing data set.

With the foregoing arrangement, it is possible to realize a relatively small size of the complementing data set being transmitted and received via the network in accordance with the command from the user. Thus, it is possible to further reduce the communication cost and the waiting time in the communication related to transmission and reception of the complementing data set.

Further, the media data reproduction device is preferably arranged so that the receiving section receives the complementing data set being encrypted.

Since the complementing data set received via the network in accordance with the user's instruction being encrypted is received. It is possible to restrain a risk that contents of the data plagiarized on the network is decoded.

Further, in the media data reproduction device, it is preferable that (I) an abnormal situation detecting means is provided for detecting abnormal situation information; and (II) an operation of the receiving section and/or the control section is stopped in accordance with the abnormal situation information detected by the abnormal situation detecting means.

Here, the abnormal situation detecting means for detecting the abnormal situation information detects information regarding an illicit plagiarism and duplication of the media data set. This information is for example (i) information of an abrupt opening of a housing of the media data reproduction device, (ii) information of an unexpected electrical connection to an debug-use terminal or a memory provided therewith, (iii) an information of an unexpected behavior of a program executed in the media data reproduction device.

With the foregoing arrangement, the receiving section stops receiving the complementing data set, and/or the control section stops combining and reproducing the media data set, in a case where a suspicious person attempts an illicit plagiarism and duplication of the media data set via the media data reproduction device. This provides strong protection of the media data set against an illicit plagiarism and a duplication.

Further, the media data reproduction device is preferably so arranged that (I) the media data set is made of bit information, (II) the complementing data set is a specific portion of the bit information, and (III) the data set to be complemented is a remaining portion of the media data set from which the complementing data set is excluded.

Further, media data reproduction device is preferably arranged so that (I) the media data set includes a time-based data sequence, (II) the complementing data set is a data set extracted from the time-based data sequence at a predetermined time interval, and (III) the data set to be complemented is a remaining portion of the media data set from which the complementing data set is excluded.

Further, the media data reproduction device is preferably arranged so that the control section carries out the reproduction by combining the data set to be complemented and the complementing data set in accordance with a data-table storing therein information of which part of the media data set is allotted to the complementing data set and which part thereof is allotted to the data set to be complemented.

With the foregoing arrangement, it is possible to appropriately reproduce an arbitrary media data set by using the complementing data set and the data set to be complemented, each produced from the arbitrary data set. Further, it is possible to make it harder for a third person to illicitly obtain the musical composition data set, by regularly/irregularly changing the content of the separation table.

A media data distribution device of the present invention is for transmitting a complementing data set to the receiving section of the media data reproduction device in accordance with a request made by the media data reproduction device.

This allows the media data set to be distributed to the media data reproduction device realizing (i) a firm protection of the media data set, and (ii) convenience in distributing the media data set through a network.

Further, the media data distribution device is also preferably arranged so that the complementing data set is distributed to the receiving section in accordance with the request from the media data reproduction device, only in a case where a user of the media data reproduction device is authenticated.

With the foregoing arrangement, the complementing data set is provided to only a valid user. On the other hand, an invalid user is not able to combine and reproduce the media data set by using the media data reproduction device. Thus, it is possible to securely protect the media data set against illicit plagiarism and duplication.

Further, functions of any one of the media data reproduction device, media data reproduction method, or the media data distribution device are realized by executing, in a computer, a media data reproduction program, or a media data distribution program.

Further, it is possible to execute the media data reproduction program or the media data distribution program, by reading out, from a computer-readable recording medium, the media data reproduction program or the media data distribution program recorded in the computer-readable recording medium.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### INDUSTRIAL APPLICABILITY

As described, a media data reproduction device and a media data distribution device of the present invention allow a safe and simple distribution and reproduction of a media data set, by transmitting and receiving a complementing data set via a network. This is particularly suitable in network distribution and reproduction of a media data set (such as a movie, a TV program, a computer programs, or the like data) whose copyright should be protected.

## Claims

1. A media data reproduction device comprising:
a recording section for recording therein a part of a media data set as a data set to be complemented;
an instruction receiving section for receiving an instruction inputted by a user;
a receiving section for receiving a complementing data set via a network in accordance with an instruction of reproducing the media data set, the complementing data set being for complementing the data set to be complemented, and the instruction of reproducing received by the input-instruction receiving section; and
a control section for (I) combining (a) the data set to be complemented, which is recorded in the recording section and (b) the complementing data set being received by the receiving section, so as to obtain a compressed media data set (II) obtaining a reproducible media data set from the compressed media data set by decompressing the compressed media data set through a reversed process of a compression process, and (III) carrying out a reproduction of the reproducible media data set.

2. The media data reproduction device as set forth in claim 1, wherein the data set to be complemented is externally provided to the recording section by using a recording medium.

3. The media data reproduction device as set forth in claims 1 or 2, wherein at least one of the data set to be complemented and the complementing data set includes a plurality of data parts.

4. The media data reproduction device as set forth in any of claims 1 through 3, wherein:
after the reproduction, the control section deletes (i) the compressed media data set, (ii) the reproducible media data set, and (iii) the complementing data set that has been received by the receiving section.

5. The media data reproduction device as set forth in any of claims 1 through 4, wherein a total size of the data set to be complemented is larger than a total size of the complementing data set.

6. The media data reproduction device as set forth in any of claims 1 through 5, wherein the receiving section receives the complementing data set being encrypted.

7. The media data reproduction device as set forth in any of claims 1 through 6, wherein:
an abnormal situation detecting means is provided for detecting abnormal situation information; and
an operation of the receiving section and/or the control section is stopped in accordance with the abnormal situation information detected by the abnormal situation detecting means.

8. The media data reproduction device as set forth in any of claims 1 through 7, wherein:
the media data set is made of bit information,
the complementing data set is a specific portion of the bit information, and
the data set to be complemented is a remaining portion of the media data set from which the complementing data set is excluded.

9. The media data reproduction device as set forth in any of claims 1 through 8, wherein:
the media data set includes a time-based data sequence,
the complementing data set is a data set extracted from the time-based data sequence at a predetermined time interval, and
the data set to be complemented is a remaining portion of the media data set from which the complementing data set is excluded.

10. The media data reproduction device as set forth in any of claims 1 through 9, wherein:
the control section carries out the reproduction by combining the data set to be complemented and the complementing data set in accordance with a data-table storing therein information of which part of the media data set is allotted to the complementing data set and which part thereof is allotted to the data set to be complemented.

11. A media data distribution device for distributing the complementing data set to the receiving section of the media data reproduction device as set forth in any of claims 1 through 10, in accordance with a request made by the media data reproduction device.

12. The media data distribution device as set forth in claim 11, wherein:
the complementing data set is distributed to the receiving section in accordance with the request from the media data reproduction device, only in a case where a user of the media data reproduction device is authenticated.

13. A method for reproducing media data set, comprising:
the recording step of recording a part of the media data set as a data set to be complemented;
the instruction receiving step of receiving an instruction inputted by a user;
the receiving step of receiving a complementing data set from an external device via a network in accordance with an instruction of reproducing a media data set, the complementing data set being for complementing the data set to be complemented, the instruction being received in the receiving step; and
the combining and reproducing step of (I) combining (a) the data set to be complemented, which is recorded in the recording step and (b) the complementing data set received in the receiving step, so as to obtain a compressed media data set, (II) decompressing the compressed media data set through a reversed process of a compression process so as to obtain a reproducible media data set, and (III) reproducing the reproducible media data set.

14. The method as set forth in claim 13, wherein the data set to be complemented, which is recorded in the recording step, is externally distributed by using a recording medium.

15. A media data reproduction program for causing a computer to function as a media data reproduction device as set forth in any of claims 1 through 10.

16. A computer-readable recording medium storing therein a media data reproduction program as set forth in claim 15.

17. A media data distribution program for causing a computer to function as a media data distribution device as set forth in claims 11 or 12.

18. A computer-readable recording medium containing a media data distribution program as set forth in claim 17.
